# EUROPEAN PATENT APPLICATION

(11) **EP 4 184 287 A1**
(43) Date of publication of application: **24.05.2023**
(21) Application number: 22200255.2
(22) Date of filing: 07.10.2022
(51) Int. Cl.: G06F 1/26

(54) **ROLE DETECTION FOR USB-BASED CHARGING**

(30) Priority: 19.11.2021 US 202117531522
(71) Applicant: INTEL Corporation, Santa Clara, CA 95054 (US)
(72) Inventor: KASICHAINULA, Kishore, Phoenix, AZ 85023 (US); CHELLAPPAN, Satheesh, Folsom (US); ZHU, Zhenyu, Folsom, CA 95630 (US)
(74) Representative: Viering, Jentschura & Partner mbB Patent- und Rechtsanwälte

(57) **Abstract**

Embodiments herein relate to an electronic device that includes a system-on-chip (SoC). The electronic device may further include a USB port to provide a first identification signal that is at a first voltage and that is related to a charging process between a USB device to which the USB port is coupled an the electronic device. The electronic device may further include a power delivery (PD) controller to: generate, based on the first identification signal, a second identification signal at a second voltage that is lower than the first voltage; and provide the second identification signal to the SoC. Other embodiments may be described and claimed.

## Description

### FIELD

The present application generally relates to the field of electronic circuits and, more specifically, to low-latency role detection for universal serial bus (USB)-based battery charging and associated apparatuses, systems, and methods.

### BACKGROUND

USB may be implemented on mobile and handheld devices such as mobile phones, tablet devices, personal digital assistants (PDAs), headphones, etc. USB-based charging may be used with a variety of devices to either charge a dual-role device (DRD), for example if the DRD is in a device role, or to charge a USB device from the DRD, for example if the DRD is in a host role.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
Figure 1 illustrates a simplified example block diagram of an electronic system configured for USB-based charging, in accordance with various embodiments.
Figure 2 illustrates an alternative simplified example block diagram of a DRD configured for USB-based charging, in accordance with various embodiments.
Figure 3 illustrates an example configuration of a DRD configured for USB-based charging, in accordance with various embodiments.
Figure 4 illustrates an example configuration of a system-on-chip (SoC) of a DRD configured for USB-based charging, in accordance with various embodiments.
Figure 5 illustrates a smart device or a computer system or an SoC with apparatus and/or software for analysis or correction of duty-cycle issues, in accordance with some embodiments.

### DETAILED DESCRIPTION

In the following detailed description, reference is made to the accompanying drawings that form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

Generally, as used herein, the term "host role" may refer to a role in which the device is configured to provide current. In other words, a device in the host role may be configured to be a charging device. By contrast, the term "device role" may refer to a role in which the device is configured to receive current. In other words, a device in the device role may be configured to be charged. The term "DRD" may refer to an electronic system that is capable of taking the host role or the device role. Such a system may include a mobile battery pack, a laptop computer, a desktop computer, a mobile device such as a cellular phone or PDA, or some other type of device. The term "USB device" may refer to an electronic device that is coupled with a DRD via a USB connection. Such a device may be, for example, a device that is to be charged by the DRD when the DRD is in the host role. Examples of such devices may include a battery pack, a mobile phone, a peripheral USB device such as a headset or camera, or some other type of electronic device. As another example, a USB device may be a device that is configured to charge the DRD when the DRD is in the device role. Such a device may include a battery pack, a charging station (e.g., such as may be coupled with a power source like a wall power socket), or some other type of device.

As previously noted, USB may be implemented on mobile and handheld devices such as mobile phones, tablet devices, PDAs, headphones, etc. USB-based charging may be used with a variety of portable devices such as USB devices and DRDs, as described above. Generally, in order to enable fast charging, certain initial parameters related to the the charging device and the device that is being charged. Such parameters may include host/device role identification (e.g., whether the DRD has a host role or a device role), cable orientation, or the type of charger present on the DRD or the USB device. Generally, this detection process may be performed at voltages at or above approximately 1.8 Volts (V) and traditionally implemented on a SoC of the DRD However, as SoCs of the DRD get smaller (e.g., below approximately 14 nanometers (nm)), elements of the SoC such as the thin gate oxide may break down at voltages at or above approximately 1.8V.

Additionally, in some embodiments synchronization issues may occur between USB hardware and software drivers (e.g., the software stack) in the DRD. Such synchronization issues may be based on legacy techniques for role identification.

Embodiments herein relate to a scalable solution to enable off-SoC identification of one or more of the above-described parameters. Specifically, embodiments relate to the use of an off-SoC element (referred to herein as a power delivery (PD) controller) of a DRD. The PD controller may be able to manage the identification at the relatively higher voltages, and then provide information to the SoC at voltages below approximately 1.8V. The PD controller may allow for a low latency and converged role indication to the SoC. Additionally, the SoC may provide for communication and processing between a hardware-implemented integrated sensor hub (ISH) of the SoC and a USB controller of the SoC such as the USB host controller or USB device controller, which may significantly reduce latency.

More generally, embodiments herein relate to a PD controller of a DRD that may perform USB host/device role detection for USB 3.x and/or USB2. Embodiments may allow for convergence of role detection between USB3.x and USB2.0, as well as reduction/elimination of synchronization concerns related to USB controllers and the USB software stack as described above. In embodiments, the software may be considered to be the master source for configuring the DRD for a host or device role for one or both of USB 3.x and USB2.0. Specifically, the SoC, and more particularly the USB host controller of the SoC, may include a dual-role register (e.g., a register that may include data related to a device role and/or host role of the DRD) that is accessible on memory-mapped input/output (MMIO) register space. As a result, embodiments may provide for convergence of communication role identification, and provide a low-latency technique for configuring the DRD for a host or device role.

Some embodiments may provide a converged interface to communicate control and status information between the host device and USB device. Some embodiments may additionally or alternatively provide for a peer-to-peer path with low latency for USB-related communication within the host device. Some embodiments may additionally or alternatively provide a dual-role status register for a software driver of the SoC to identify a change in role of the DRD. Some embodiments may additionally or alternatively provide for a master override control from the software driver(s) of the SoC through altering one or more values in a USB host controller register of the SoC.

Generally, embodiments herein may be applicable to DRDs, as described above. Specifically, techniques herein may provide for a user override mode for the host or device role as described above. Embodiments may further provide for a scalable solution that has a reduce SoC pin count.

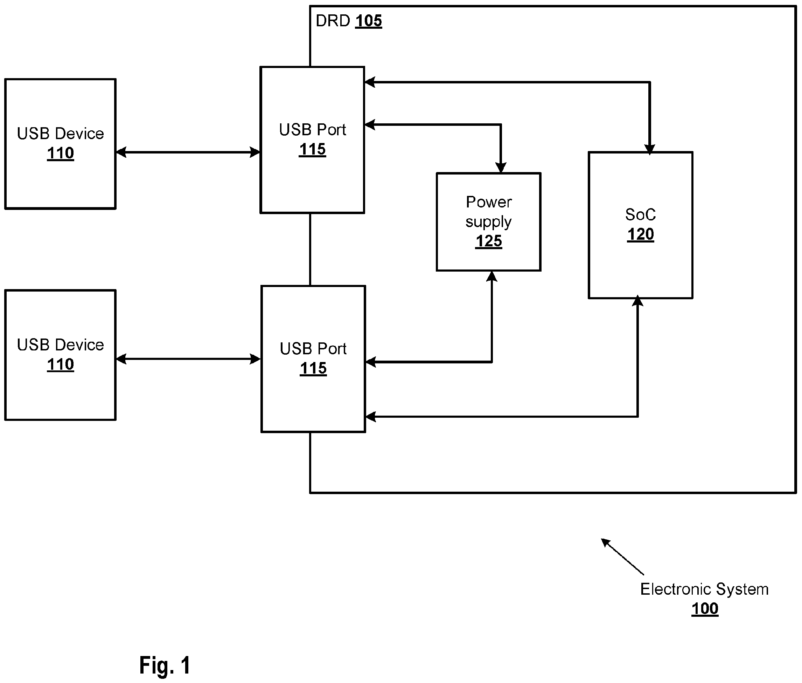

Figure 1 illustrates a simplified example block diagram of an electronic system 100 configured for USB-based charging, in accordance with various embodiments.

The electronic system 100 may include a DRD 105. The DRD 105 may be an electronic device such as mobile battery pack, a laptop computer, a desktop computer, a mobile device such as a cellular phone or PDA, or some other type of device as described above . The DRD 105 may include a number of USB ports 115, which may be configured to respectively couple to a USB device 110. A USB device 110 may be an electronic device that is configured to couple with the DRD 105 (via USB port(s) 115) through a USB connection such as a USB 2.0 connection, a USB 3.x connection, and/or some other type of USB connection. As described above, if the DRD 105 is in a host role, then the USB device 110 may be configured to be charged by the DRD 105. Alternatively, if the DRD is in a device role, then the USB device 110 may be configured to charge the DRD 105.

It will be noted that, in some embodiments, the DRD 105 may assume different roles in relation to different ones of the USB devices 110. For example, the DRD 105 may assume a host role while one of the USB devices 110 assumes a device role. The DRD 105 may also assume a device role while another of the USB devices 110 assumes a host role. The role-related communication may be handled by SoC 120 and, particularly, an ISH of the SoC 120 as will be described in greater detail below.

The SoC 120 may include a USB host controller and a USB device controller as will be discussed in greater detail below. Generally, the SoC 120, and the USB controllers, may be configured to controller operation of the DRD 105 in the host role or device role.

The DRD 105 may further include a power supply 125 that is coupled with the USB ports 115. In some embodiments, the power supply 125 may be a battery such as a lithium ion battery or some other type of battery. In some embodiments, the power supply 125 may additionally or alternatively draw or supply power from an external power source such as a wall-outlet, an external battery packet, etc. The specific form of the power supply 125 may vary dependent on factors such as the form factor or use case of the DRD 105. Generally, the power supply 125 may be configured to supply current when the DRD 105 is operating in a host mode, and draw current when the DRD 105 is operating in a device mode.

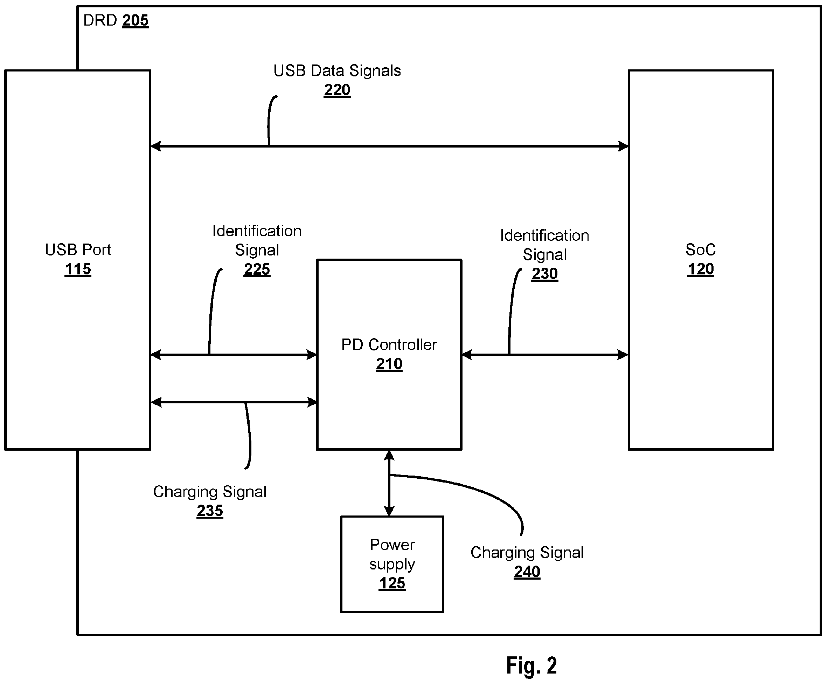

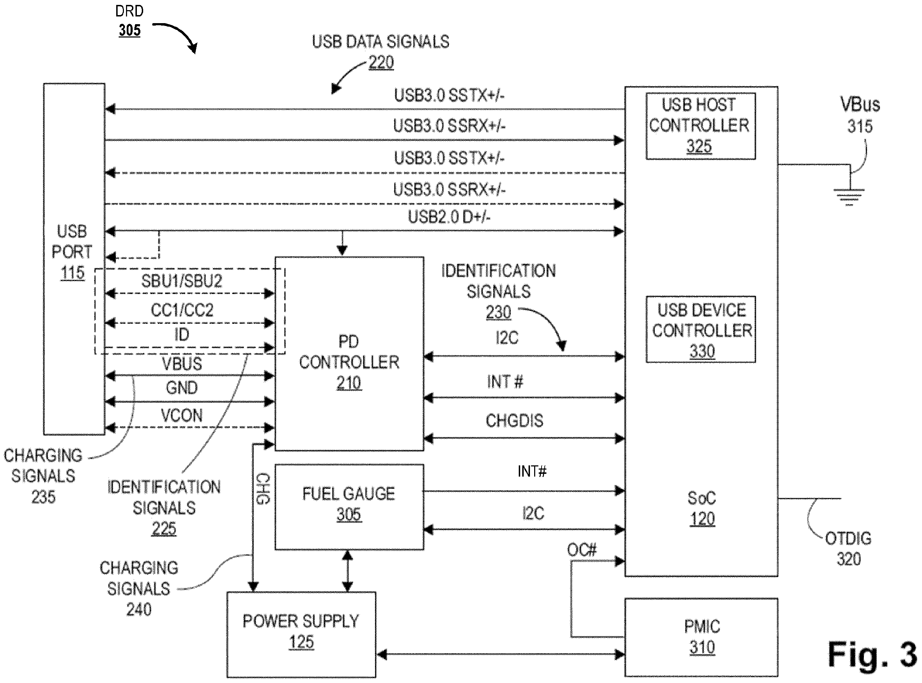

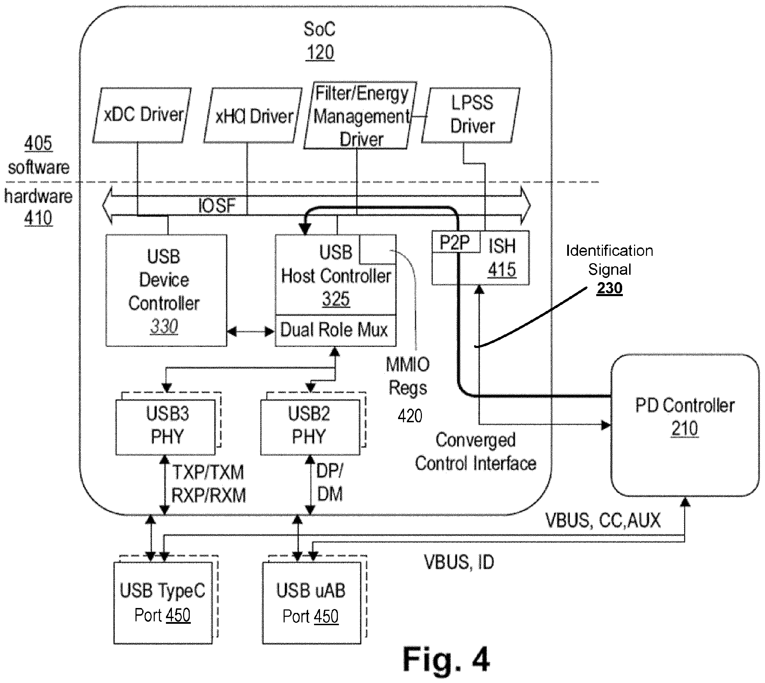

Figure 2 illustrates an alternative simplified example block diagram of a DRD 205 configured for USB-based charging, in accordance with various embodiments. The DRD 205 may be generally similar to DRD 105, and may share one or more elements or characteristics. It will be understood that although only a single USB port 115 and a single PD controller 210 are illustrated in Figure 2 (as well as Figures 3 and 4), in other embodiments the DRD 205 may include a plurality of respective USB ports and PD controllers as described above with respect to Figure 1.

The DRD 205 may include USB port 115 and SoC 120 as shown. The DRD 205 may further include a PD controller 210. In some embodiments the PD controller 210 may be referred to as a physical layer (PHY) integrated circuit (IC) or a charger IC. The DRD 205 may further include power supply 125, which is communicatively coupled with the PD controller 210. That is, although not specifically shown in Figure 1, the PD controller 210 may be communicatively coupled between the USB port 115 and the power supply 125. The PD controller 210 may further be communicatively coupled between the USB port 115 and the SoC 120. Further, the USB port 115 and the SoC 120 may be configured to transmit one or more USB signals (e.g., signals that are related to data or control messages in accordance with USB 2.0, USB 3.x, or some other USB format).

In embodiments, the USB port 115 may provide one or more identification signals 225 to the PD controller. In some embodiments, the identification signals 225 may be generated by a USB device such as USB device 110. Additionally or alternatively, the identification signals 225 may be generated by the USB port 115 and may be based on information provided by the USB device or internal logic of the USB port 115. The identification signal(s) 225 may include information related to host/device role identification, cable orientation, or the type of charger present. The identification signal(s) 225 may be provided at a voltage that is high enough that it could cause damage to circuitry of the SoC 120. For example, the identification signal(s) may be transmitted at 5 V, 3.3V, 1.8V, or some other voltage.

Based on the identification signal(s) 225, the PD controller 210 may be configured to identify whether the DRD 205 is to act in a host role or a device role with respect to the USB device that is coupled with the USB port 115. The PD controller 210 may further be configured to identify the type of charger present, the orientation of one or more USB cables (which could affect pin assignment), the voltage at which the charging signals are to be transmitted, the amount of current that needs to be supplied or drawn, etc. Based on this identification, the PD controller 210 may generate and transmit an identification signal 230 to the SoC 120. Such an identification signal may include an indication of one or more of the above-described parameters. The identification signal 230 may be processed by an ISH of the SoC 120 as will be described below. In some embodiments, the identification signal 230 may be transmitted on one or more I2C pins of the SoC. In other embodiments, the identification signal 230 may additionally or alternatively be transmitted on one or more serial peripheral interface (SPI) pins of the SoC or some other pin of the SoC. In embodiments, the identification signal 230 may have a voltage of less than approximately 1.8V.

Based on the identification signal 230, the DRD 205 and, more particularly, the SoC 120 may operate in accordance with a host role or a device role with respect to the USB device. Specifically, the USB port 115, PD controller 210, and power supply 125 may be configured to exchange one or more charging signals 235 and 240. Specifically, if the DRD 205 is operating in a host mode with respect to the USB device coupled with the USB port 115, then the PD controller 210 may draw current from the power supply via charging signal 240, and then supply that current to the USB port 115 (and through the USB port to the USB device) via charging signal 235. Alternatively, if the DRD 205 is operating in a device mode, then the PD controller 210 may draw current from USB port 115 (and, more specifically, the USB device through the USB port) via charging signal 235 and then supply the current to the power supply 125 via charging signal 240. In some embodiments, charging signals 235 and 240 may have the same characteristics such as current, voltage, phase, etc. In other embodiments, the charging signals 235 and 240 may have different characteristics than one another. In some embodiments, the charging signal(s) 235 and/or 240 may have a current of approximately 500 milliamps (mA) for USB 2.0 devices, approximately 900mA for USB 3.x device, 1.5 Amps (A) for USB Type-C devices, etc.

The above-described embodiment of Figure 2 may provide benefits in the field of USB charging. Specifically, by offloading processing of the identification signal 225 to the PD controller 210, and then subsequent managing of the USB-based charging process between USB port 115 and power supply 125, the circuitry of the SoC 120 may be protected from relatively higher voltages. Additionally, the use of the PD controller 210, and the processing therein, may allow for further size reductions of the SoC 120.

Figure 3 illustrates an example configuration of a DRD 305 configured for USB-based battery charging, in accordance with various embodiments. Specifically, Figure 3 depicts example architectural details of a DRD 305 that may be considered to be a detailed example of the DRD 205 of Figure 2.

The DRD 305 may include, among other things, PD controller 210, SoC 120, fuel gauge 305, USB port 115, power management IC (PMIC) 310, and power supply 125. The SoC 120 may include a USB host controller 325, which is primarily responsible for USB functions when the DRD 305 is operating in a host role, and a USB device controller 330, which is primarily responsible for USB functions when the DRD 305is operating in a device role. Figure 3 further depicts a number of pins and connections between the USB port 115 and the SoC 120, the USB port 115 and the PD controller 210, the PD controller 210 and the SoC 120, the fuel gauge 305 and the SoC 120, the PMIC 310 and the SoC 120, the PD controller 210 and the power supply 125, or other pins of elements of the DRD 305.

In the embodiment of Figure 3, the "dash" structure of the various lines may indicate different conceptual groupings related to the USB standards. Specifically, the "ID" connection, indicated by the relatively longer dashes in Figure 3, between the USB port 115 and the PD controller 210 may not exist if the USB connector and port are implemented as USB Type-C. Additionally, the various connections indicated by the relatively shorted connections such as the second pair of SSTX or SSRX connections, the DP or DM connection, the SBU1 or SBU2 connections, the CC1 or CC2 connections, and/or the VCON pins may not be present if the USB connector and port are implemented as USB microAB (µAB) connections.

Generally, as noted above, the PD controller 210 may be used for role detection or one or more of the other identification elements described above. In this role, the PD controller 210 may receive identification signals 225 on one or more of the listed pins such as SBU1/SBU2, CC1/CC2, ID, or some other pin such as one or more SPI pins (not shown in Figure 3). The PD controller 210 may process the identification signal(s) 225 and generate one or more of the identification signals 230 as described above. The identification signal(s) 230 may be provided to the SoC on an I2C pin.

The PD controller 210 may further communicate one or more charging signals 235 with the USB port 115 via the VBus pin, as described above. Similarly, the PD controller 210 may exchange one or more charging signals 240 with the power supply 125 via the bidirectional CHG pin.

The fuel gauge 305 may be coupled with the power supply 125 and used for detection of capacity of the power supply 125. Specifically, the fuel gauge 305 may be coupled to the SoC 120 and power supply 125 and configured to provide one or more indications of capacity of the power supply 125 to the SoC 120 via an I2C pin or an INT# pin.

As may be seen the differential transmit (TX) and receive (RX) pairs, e.g. USB3.x SSTX+/- and USB3.0 SSRX+/- may be directly coupled between the SoC 120 and the USB port 115, and configured to carry the USB data signals 220 as described above. In some embodiments, the differential pair USB2.0 D+/- may be coupled with the USB port 115, the SoC 120, and the PD controller 210 as shown. In this situation, the PD controller 210 may act as a shunt.

The VBus pin 315 may be coupled to ground, and the on-the-go identification (OTGID) pin 328 of the SoC 120 may be left floating. The PD controller 210 and the SoC 120 may be coupled to one another through an interrupt line (INT#) and an I2C bus, as shown.

The overcurrent pin (OC#) may couple the PMIC 310 and the SoC 120.The PMIC 310 may be configured to power the SoC 120. Although not shown, the PMIC 310 may further be coupled with one or more of the fuel gauge 305, PD controller 210, and USB port 115, and provide power to those elements of the DRD 305 (or other elements of the DRD 305 that are now shown in Figure 3).

An INT# signal on the INT# pin (which may additionally or alternatively be referred to as an "ALERT" pin) between the fuel gauge 305 and the SoC 120 may generate an interrupt on power supply 125 insertion/removal, over/under voltage, and/or over/under temperature. In the case of a dead battery or a missing battery (as may be indicated by the INT# signal), the electronic system 300 may be prevented from booting.

As may be seen in Figure 3, the SoC 120 may include two separate controllers, the USB host controller 325 (which may also be referred to as the xHCl) and the USB device controller 330 (which may also be referred to as the xDCl). The host controller 325 and the device controller 330 may be multiplexed within the SoC 120. The multiplexing may be controlled by hardware and/or software, as will be described in greater detail below in Figure 4. For enabling USB-based charging using the PD controller 210, a dual-role register may be mapped to the USB host controller 325 MMIO address space as described above. The DRD 305 may be connected to a USB device via a USB connection such as USB port 115 (which may be a type-C or µAB port). An example of such a register is depicted below in Table 1. Specifically, Table 1 depicts an example of USB BC1.2 charging types. It will be noted that this example is intended as one example of information in such a register, and other information may be used or included in other embodiments.

**Table 1**

| Case | Device attached at Type-C or µAB | Software (SW) OTGID | SW VBUS | Hardware (HW) OTGID | HW VBUS | USB Mode |
|---|---|---|---|---|---|---|
| 1 | None/SDP-OFF/CDP-OFF/DCP-OFF None thru ACA/A-device-OFF thru ACA/Error condition | 1 | 0 | Float | VSS | RID_Float; Device mode |
| 2 | SDP-ON | 1 | 1 | Float | VSS | RID_Float; Device mode - active |
| 3 | CDP-ON | 1 | 1 | Float | VSS | RID_Float; Device mode - active |
| 4 | DCP-ON | 1 | 0 | Float | VSS | RID_Float; Device mode |
| 5 | B-device (peripheral) | 0 | 0 | Float | VSS | RID_GND; Host mode |
| 6 | A-device-ON thru ACA | 1 | 1 | Float | VSS | RID_Float; device mode - active |
| 7 | B-device thru ACA | 0 | 0 | Float | VSS | RID_GND; host mode |
| 8 | None thru ACA + Charger/A-device-OFF thru ACA + Charger | 1 | 0 | Float | VSS | RID_B; device mode |
| 9 | A-device-ON thru ACA + Charger | 1 | 1 | Float | VSS | RID_C; device mode - active |
| 10 | B-device thru ACA + Charger | 0 | 0 | Float | VSS | RID_A; host mode |
| 11 | ACA-dock | 0 | 0 | Float | VSS | RID_A; host mode |

With respect to Table 1, it will be noted that the term "SDP" may refer to a standard down stream port. "CDP" may refer to a charging down stream port. "DCP" may refer to a dedicated charging port. "ACA" may refer to an accessory charging adaptor. "RID" may refer to a resistive ID. It will also be noted that, with respect to Table 1, an OTGID value of 0 and a VBus value of 1 may be considered an illegal condition. Additionally, ACA use cases may not be valid of a USB Type-C port is used.

Generally, Table 1 may describe how software-controlled OTGID and VBus bits in the dual-role register may be programmed for various use cases. Specifically, when the SoC 120 is operating in host role, the PD controller 210 may be responsible for driving 5V on the VBus pin of a type-C or µAB port. Also, the PD controller 210 may be responsible for detecting resistance on the ID pin (in the case of a USB protocol that is not USB Type-C. For USB Type-C protocols, the resistance may be detected on the CC1 and/or CC2 pins depicted in Figure 3) and presence of a signal on the VBus pin. The PD controller 210 may generate an interrupt (e.g., on the INT# pin) for various conditions such as charging, not charging, a missing battery, a dead battery, a battery being over-voltage, an overcurrent condition, over-temperature conditions, time-out, etc. Upon receiving the interrupt the SoC 120, or elements or drivers thereof such as an ISH, may invoke different code or drivers that are responsible for reading the status in the PD controller 210 through the I2C interface (or some other interface such as an SPI interface) and program the dual-role register in the USB host controller 325 MMIO space accordingly.

Figure 4 illustrates an alternative example configuration of an electronic system 400 configured for USB-based battery charging, in accordance with various embodiments. Specifically, the electronic system 400 may include SoC 120, and illustrates that elements of the SoC (e.g., the drivers) may be implemented in software 405, while other elements of the SoC may be implemented in hardware 410. Figure 4 illustrates the different elements that may be associated with the SoC 120 and the different connections (e.g., between the PD controller 210 and elements such as USB ports 450 which may be similar to USB ports 115 described herein ). Figure 4 also depicts the ISH 415 and the MMIO register 425 described elsewhere herein.

In legacy embodiments, USB configuration process may have been performed at least partially in the software 405 of the SoC 120, e.g. in the energy management driver or some other driver. However, in embodiments herein the ISH 415 and PD controller 210 may work together to perform the USB configuration process in hardware 410. Specifically, the ISH 415 may be configured to identify, based on the identification signal 230 routing of data related to the identification signal 230 from the PD controller 210 to the USB host controller 325 (as shown by the bolded line in Figure 4) and/or to the USB device controller 330. The ISH 415 may further be configured to route, based on whether the DRD is in a host mode or device mode, signals related to the charging process (e.g., control signals or some other type of signals) between the PD controller 210 and the USB host controller 325 or the USB device controller 330.

In some embodiments, during cold boot, the SoC 120 may be under hardware mode until the basic input/output system (BIOS) boots up and, optionally, changes the mode to software control. The hardware mode may be based on the type of USB cable plugged into a USB port such as USB port 115. In this embodiment, the PD controller 210 may detect an identification signal 225, e.g. on the ID pin (or CC1 and/or CC2 pins as described above), and generate the identification signal 230 as described above.

It will be understood that the above-described embodiment of Figure 4 may provide benefits over legacy techniques. Specifically, legacy embodiments may have routed the identification signal 230 through various drivers of the software 405. However, the use of the software may have introduced latency to the system. By keeping the routing of the identification signal 230 in the hardware 410 of the SoC 120, as depicted in Figure 4, latency of the charging process may be significantly reduced. For example, in some embodiments the latency of role identification may be reduced to below approximately 100 ms.

In some embodiments, the SoC 120 may be placed in the device role by default. This defaulting to the device role may be because, during the role detection process, the USB 2.0 lines coupled with the SoC 120 may need to be in a high-impedance state so that they don't interfere with the charging role detection process. Although there may be various types of USB devices used, from a USB attach or detach perspective there may be four generalized use cases as described below:

### A-plug attach event (Host role entry)

1) OTGID=RID_GND or RID-A or CC=Host and VBUS=0.
2) PD controller 210 sends an interrupt to SoC.
3) The SoC 120 (e.g., through the I2C driver) software reads ID/VBUS and device status through the I2C pin.
4) Software/firmware of the SoC 120 (e.g., the I2C driver (not shown in Figure 4) or some other element) writes ID/VBUS status into MMIO register 420 as per Table 1.
5) USB Host Controller 325 driver enables the port and usb3 host controller is brought out of D3 and port terminations are enabled.
6) The USB subsystem may still be in low power mode until it detects RX terminations (USB3 - P2 state).

### A-plus detach event (Host mode exit)

1) OTGID=RID_Float or CC=Disconnect and VBUS=0.
2) PD controller 210 sends an interrupt to SoC 120.
3) The SoC 120 (e.g., the I2C driver) reads ID/VBUS and device status through I2C pin.
4) USB subsystem already detects that far-end RX terminations are removed and goes into superspeed (SS).inactive state.
5) Software and/or firmware of the SoC 120 (e.g., the I2C driver or some other element) writes ID=1 and VBUS=0 into MMIO register 420 (SoC 120 is put into device mode).
6) PD controller 210 turns offf driving VBUS if not already performed.

### B-plug attach event (Device mode entry)

1) OTGID=RID_Float or RID_B or RID_C or CC=Device and VBUS=1
2) PD controller 210 sends an interrupt to SoC 120.
3) The SoC 120 (e.g., the I2C driver) reads ID/VBUS and device status through I2C.
4a) If the downstream port is DCP, no software or firmware update of MMIO register 420 happens, and no wake event of USB subsystem occurs.
4b) If the status is RID_B, no software or firmware update of MMIO register 420 happens and no wake event of USB subsystem occurs.
4c) If the downstream port is SDP/CDP or a host connected through ACA, then the software or firmware updates the ID=1 and VBUS=1 after 900ms of delay to complete the charging detection. This may cause a wake event through power management events (PMEs).
5) USB3 device controller is brought out of D3 and device initiates an attach event by enabling its terminations.

### B-plug detach event (Device mode exit)

1) OTGID=RID_Float or CC=Disconnect and VBUS=0
2) PD controller 210 detects VBUS removal, stops the charging process, and sends an interrupt to SoC 120.
3) SoC 120 (e.g., the I2C driver) driver software reads ID/VBUS and device status through I2C.
4) Software and/or firmware of the SoC 120 (e.g., the I2C driver or some other element) updates the MMIO register 420 with ID=1 and VBUS=0.
5) USB device driver (e.g., the xDC driver and/or the xHC driver depicted in Fig. 4) puts the USB device controller in power-down mode upon detecting VBUS=0.

The converged PD controller and Host/Device role detection flow may provide architectural convergence and cost saving. However, it will be recognized that this description is a description of one example embodiment. Other embodiments may provide other variations that may optimize the detection and charging process flow by, for example, placing an I2C Controller in the SoC 120 and provide a hardware-based BC and DRD Manager. Specifically, in Figure 4, the I2C control may be performed through the PD controller as described above. Another mechanism may be to provide the I2C commands via an integrated on-chip system fabric (IOSF) special vendor defined message (VDM) packets via a peer-to-peer between the USB host controller 325 and the ISH 415. In other embodiments, a smart battery charger may be used, which can handle the control that may have a DSP to sequence the operations. In another embodiment, a DRD manager may be used.

Generally, it will be recognized that embodiments herein are intended as illustrative examples of the concepts of the present disclosure. Other embodiments may include more or fewer elements, elements in a different configuration, etc. than may be shown in Figures 1-4.

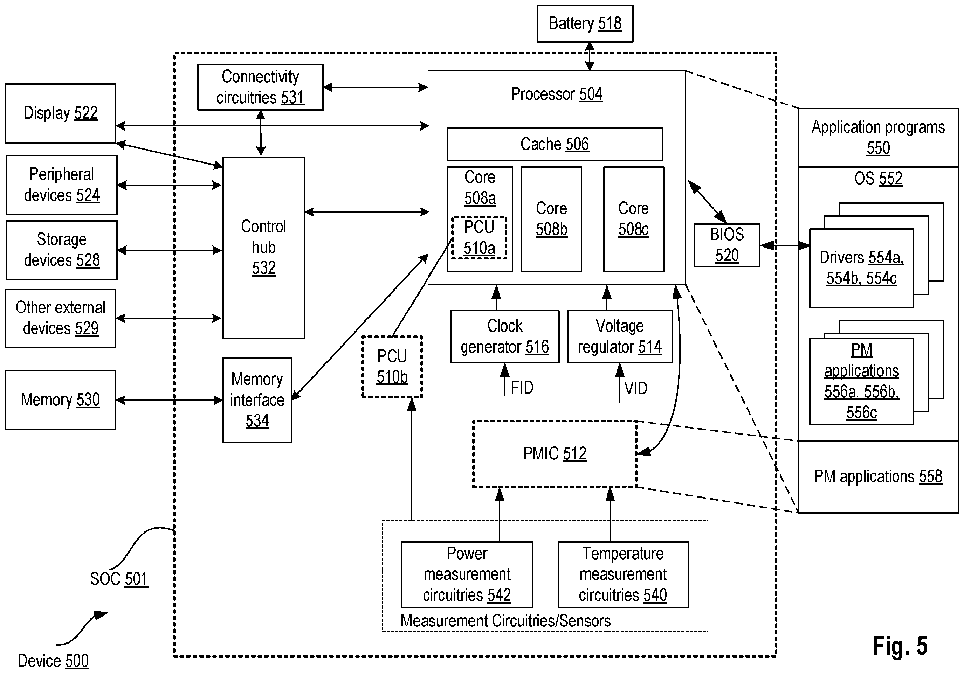

Fig. 5 illustrates a smart device or a computer system or a SoC with apparatus and/or software for analysis or correction of duty-cycle issues, in accordance with some embodiments.

In some embodiments, device 500 represents an appropriate computing device, such as a computing tablet, a mobile phone or smartphone, a laptop, a desktop, an Internet-of-Things (IOT) device, a server, a wearable device, a set-top box, a wireless-enabled e-reader, or the like. It will be understood that certain components are shown generally, and not all components of such a device are shown in device 500. The apparatus and/or software for controlling wake sources in a system to reduce power consumption in sleep state can be in the wireless connectivity circuitries 531, PCU 510, and/or other logic blocks (e.g., operating system 552) that can manage power for the computer system.

In an example, the device 500 comprises an SoC 501. An example boundary of the SoC 501 is illustrated using dotted lines in Fig. 5, with some example components being illustrated to be included within SoC 501 - however, SoC 501 may include any appropriate components of device 500.

In some embodiments, device 500 includes processor 504. Processor 504 can include one or more physical devices, such as microprocessors, application processors, microcontrollers, programmable logic devices, processing cores, or other processing means. The processing operations performed by processor 504 include the execution of an operating platform or operating system on which applications and/or device functions are executed. The processing operations include operations related to I/O (input/output) with a human user or with other devices, operations related to power management, operations related to connecting computing device 500 to another device, and/or the like. The processing operations may also include operations related to audio I/O and/or display I/O.

In some embodiments, processor 504 includes multiple processing cores (also referred to as cores) 508a, 508b, 508c. Although merely three cores 508a, 508b, 508c are illustrated in Fig. 5, processor 504 may include any other appropriate number of processing cores, e.g., tens, or even hundreds of processing cores. Processor cores 508a, 508b, 508c may be implemented on a single IC chip. Moreover, the chip may include one or more shared and/or private caches, buses or interconnections, graphics and/or memory controllers, or other components.

In some embodiments, processor 504 includes cache 506. In an example, sections of cache 506 may be dedicated to individual cores 508 (e.g., a first section of cache 506 dedicated to core 508a, a second section of cache 506 dedicated to core 508b, and so on). In an example, one or more sections of cache 506 may be shared among two or more of cores 508. Cache 506 may be split in different levels, e.g., level 1 (L1) cache, level 2 (L2) cache, level 3 (L3) cache, etc.

In some embodiments, processor core 504 may include a fetch unit to fetch instructions (including instructions with conditional branches) for execution by the core 504. The instructions may be fetched from any storage devices such as the memory 530. Processor core 504 may also include a decode unit to decode the fetched instruction. For example, the decode unit may decode the fetched instruction into a plurality of micro-operations. Processor core 504 may include a schedule unit to perform various operations associated with storing decoded instructions. For example, the schedule unit may hold data from the decode unit until the instructions are ready for dispatch, e.g., until all source values of a decoded instruction become available. In one embodiment, the schedule unit may schedule and/or issue (or dispatch) decoded instructions to an execution unit for execution.

The execution unit may execute the dispatched instructions after they are decoded (e.g., by the decode unit) and dispatched (e.g., by the schedule unit). In an embodiment, the execution unit may include more than one execution unit (such as an imaging computational unit, a graphics computational unit, a general-purpose computational unit, etc.). The execution unit may also perform various arithmetic operations such as addition, subtraction, multiplication, and/or division, and may include one or more an arithmetic logic units (ALUs). In an embodiment, a coprocessor (not shown) may perform various arithmetic operations in conjunction with the execution unit.

Further, execution unit may execute instructions out-of-order. Hence, processor core 504 may be an out-of-order processor core in one embodiment. Processor core 504 may also include a retirement unit. The retirement unit may retire executed instructions after they are committed. In an embodiment, retirement of the executed instructions may result in processor state being committed from the execution of the instructions, physical registers used by the instructions being de-allocated, etc. Processor core 504 may also include a bus unit to enable communication between components of processor core 504 and other components via one or more buses. Processor core 504 may also include one or more registers to store data accessed by various components of the core 504 (such as values related to assigned app priorities and/or subsystem states (modes) association).

In some embodiments, device 500 comprises connectivity circuitries 531. For example, connectivity circuitries 531 includes hardware devices (e.g., wireless and/or wired connectors and communication hardware) and/or software components (e.g., drivers, protocol stacks), e.g., to enable device 500 to communicate with external devices. Device 500 may be separate from the external devices, such as other computing devices, wireless access points or base stations, etc.

In an example, connectivity circuitries 531 may include multiple different types of connectivity. To generalize, the connectivity circuitries 531 may include cellular connectivity circuitries, wireless connectivity circuitries, etc. Cellular connectivity circuitries of connectivity circuitries 531 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, 3rd Generation Partnership Project (3GPP) Universal Mobile Telecommunications Systems (UMTS) system or variations or derivatives, 3GPP Long-Term Evolution (LTE) system or variations or derivatives, 3GPP LTE-Advanced (LTE-A) system or variations or derivatives, Fifth Generation (5G) wireless system or variations or derivatives, 5G mobile networks system or variations or derivatives, 5G New Radio (NR) system or variations or derivatives, or other cellular service standards. Wireless connectivity circuitries (or wireless interface) of the connectivity circuitries 531 refers to wireless connectivity that is not cellular, and can include personal area networks (such as Bluetooth, Near Field, etc.), local area networks (such as Wi-Fi), and/or wide area networks (such as WiMax), and/or other wireless communication. In an example, connectivity circuitries 531 may include a network interface, such as a wired or wireless interface, e.g., so that a system embodiment may be incorporated into a wireless device, for example, a cell phone or PDAs.

In some embodiments, device 500 comprises control hub 532, which represents hardware devices and/or software components related to interaction with one or more I/O devices. For example, processor 504 may communicate with one or more of display 522, one or more peripheral devices 524, storage devices 528, one or more other external devices 529, etc., via control hub 532. Control hub 532 may be a chipset, a Platform Control Hub (PCH), and/or the like.

For example, control hub 532 illustrates one or more connection points for additional devices that connect to device 500, e.g., through which a user might interact with the system. For example, devices (e.g., devices 529) that can be attached to device 500 include microphone devices, speaker or stereo systems, audio devices, video systems or other display devices, keyboard or keypad devices, or other I/O devices for use with specific applications such as card readers or other devices.

As mentioned above, control hub 532 can interact with audio devices, display 522, etc. For example, input through a microphone or other audio device can provide input or commands for one or more applications or functions of device 500. Additionally, audio output can be provided instead of, or in addition to display output. In another example, if display 522 includes a touch screen, display 522 also acts as an input device, which can be at least partially managed by control hub 532. There can also be additional buttons or switches on computing device 500 to provide I/O functions managed by control hub 532. In one embodiment, control hub 532 manages devices such as accelerometers, cameras, light sensors or other environmental sensors, or other hardware that can be included in device 500. The input can be part of direct user interaction, as well as providing environmental input to the system to influence its operations (such as filtering for noise, adjusting displays for brightness detection, applying a flash for a camera, or other features).

In some embodiments, control hub 532 may couple to various devices using any appropriate communication protocol, e.g., PCIe (Peripheral Component Interconnect Express), USB, Thunderbolt, High Definition Multimedia Interface (HDMI), Firewire, etc.

In some embodiments, display 522 represents hardware (e.g., display devices) and software (e.g., drivers) components that provide a visual and/or tactile display for a user to interact with device 500. Display 522 may include a display interface, a display screen, and/or hardware device used to provide a display to a user. In some embodiments, display 522 includes a touch screen (or touch pad) device that provides both output and input to a user. In an example, display 522 may communicate directly with the processor 504. Display 522 can be one or more of an internal display device, as in a mobile electronic device or a laptop device or an external display device attached via a display interface (e.g., DisplayPort, etc.). In one embodiment display 522 can be a head mounted display (HMD) such as a stereoscopic display device for use in virtual reality (VR) applications or augmented reality (AR) applications.

In some embodiments, and although not illustrated in the figure, in addition to (or instead of) processor 504, device 500 may include Graphics Processing Unit (GPU) comprising one or more graphics processing cores, which may control one or more aspects of displaying contents on display 522.

Control hub 532 (or platform controller hub) may include hardware interfaces and connectors, as well as software components (e.g., drivers, protocol stacks) to make peripheral connections, e.g., to peripheral devices 524.

It will be understood that device 500 could both be a peripheral device to other computing devices, as well as have peripheral devices connected to it. Device 500 may have a "docking" connector to connect to other computing devices for purposes such as managing (e.g., downloading and/or uploading, changing, synchronizing) content on device 500. Additionally, a docking connector can allow device 500 to connect to certain peripherals that allow computing device 500 to control content output, for example, to audiovisual or other systems.

In addition to a proprietary docking connector or other proprietary connection hardware, device 500 can make peripheral connections via common or standards-based connectors. Common types can include a USB connector (which can include any of a number of different hardware interfaces), DisplayPort including MiniDisplayPort (MDP), HDMI, Firewire, or other types.

In some embodiments, connectivity circuitries 531 may be coupled to control hub 532, e.g., in addition to, or instead of, being coupled directly to the processor 504. In some embodiments, display 522 may be coupled to control hub 532, e.g., in addition to, or instead of, being coupled directly to processor 504.

In some embodiments, device 500 comprises memory 530 coupled to processor 504 via memory interface 534. Memory 530 includes memory devices for storing information in device 500.

In some embodiments, memory 530 includes apparatus to maintain stable clocking as described with reference to various embodiments. Memory can include nonvolatile (state does not change if power to the memory device is interrupted) and/or volatile (state is indeterminate if power to the memory device is interrupted) memory devices. Memory device 530 can be a dynamic random-access memory (DRAM) device, a static random-access memory (SRAM) device, flash memory device, phase change memory device, or some other memory device having suitable performance to serve as process memory. In one embodiment, memory 530 can operate as system memory for device 500, to store data and instructions for use when the one or more processors 504 executes an application or process. Memory 530 can store application data, user data, music, photos, documents, or other data, as well as system data (whether long-term or temporary) related to the execution of the applications and functions of device 500.

Elements of various embodiments and examples are also provided as a machine-readable medium (e.g., memory 530) for storing the computer-executable instructions (e.g., instructions to implement any other processes discussed herein). The machine-readable medium (e.g., memory 530) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

In some embodiments, device 500 comprises temperature measurement circuitries 540, e.g., for measuring temperature of various components of device 500. In an example, temperature measurement circuitries 540 may be embedded, or coupled or attached to various components, whose temperature are to be measured and monitored. For example, temperature measurement circuitries 540 may measure temperature of (or within) one or more of cores 508a, 508b, 508c, voltage regulator 514, memory 530, a mother-board of SoC 501, and/or any appropriate component of device 500.

In some embodiments, device 500 comprises power measurement circuitries 542, e.g., for measuring power consumed by one or more components of the device 500. In an example, in addition to, or instead of, measuring power, the power measurement circuitries 542 may measure voltage and/or current. In an example, the power measurement circuitries 542 may be embedded, or coupled or attached to various components, whose power, voltage, and/or current consumption are to be measured and monitored. For example, power measurement circuitries 542 may measure power, current and/or voltage supplied by one or more voltage regulators 514, power supplied to SoC 501, power supplied to device 500, power consumed by processor 504 (or any other component) of device 500, etc.

In some embodiments, device 500 comprises one or more voltage regulator circuitries, generally referred to as voltage regulator 514. Voltage regulator 514 generates signals at appropriate voltage levels, which may be supplied to operate any appropriate components of the device 500. Merely as an example, voltage regulator 514 is illustrated to be supplying signals to processor 504 of device 500. In some embodiments, voltage regulator 514 receives one or more Voltage Identification (VID) signals, and generates the voltage signal at an appropriate level, based on the VID signals. Various type of voltage regulators may be utilized for the voltage regulator 514. For example, voltage regulator 514 may include a "buck" voltage regulator, "boost" voltage regulator, a combination of buck and boost voltage regulators, low dropout (LDO) regulators, switching DC-DC regulators, constant-on-time controller-based DC-DC regulator, etc. Buck voltage regulator is generally used in PD applications in which an input voltage needs to be transformed to an output voltage in a ratio that is smaller than unity. Boost voltage regulator is generally used in PD applications in which an input voltage needs to be transformed to an output voltage in a ratio that is larger than unity. In some embodiments, each processor core has its own voltage regulator, which is controlled by PCU 510a/b and/or PMIC 512. In some embodiments, each core has a network of distributed LDOs to provide efficient control for power management. The LDOs can be digital, analog, or a combination of digital or analog LDOs. In some embodiments, voltage regulator 514 includes current tracking apparatus to measure current through power supply rail(s).

In some embodiments, device 500 comprises one or more clock generator circuitries, generally referred to as clock generator 516. Clock generator 516 generates clock signals at appropriate frequency levels, which may be supplied to any appropriate components of device 500. Merely as an example, clock generator 516 is illustrated to be supplying clock signals to processor 504 of device 500. In some embodiments, clock generator 516 receives one or more Frequency Identification (FID) signals, and generates the clock signals at an appropriate frequency, based on the FID signals.

In some embodiments, device 500 comprises battery 518 supplying power to various components of device 500. Merely as an example, battery 518 is illustrated to be supplying power to processor 504. Although not illustrated in the figures, device 500 may comprise a charging circuitry, e.g., to recharge the battery, based on Alternating Current (AC) power supply received from an AC adapter.

In some embodiments, device 500 comprises Power Control Unit (PCU) 510 (also referred to as Power Management Unit (PMU), Power Controller, etc.). In an example, some sections of PCU 510 may be implemented by one or more processing cores 508, and these sections of PCU 510 are symbolically illustrated using a dotted box and labelled PCU 510a. In an example, some other sections of PCU 510 may be implemented outside the processing cores 508, and these sections of PCU 510 are symbolically illustrated using a dotted box and labelled as PCU 510b. PCU 510 may implement various power management operations for device 500. PCU 510 may include hardware interfaces, hardware circuitries, connectors, registers, etc., as well as software components (e.g., drivers, protocol stacks), to implement various power management operations for device 500.

In some embodiments, device 500 comprises PMIC 512, e.g., to implement various power management operations for device 500. In some embodiments, PMIC 512 is a Reconfigurable Power Management ICs (RPMICs) and/or an IMVP (Intel^{®} Mobile Voltage Positioning). In an example, the PMIC is within an IC chip separate from processor 504. The may implement various power management operations for device 500. PMIC 512 may include hardware interfaces, hardware circuitries, connectors, registers, etc., as well as software components (e.g., drivers, protocol stacks), to implement various power management operations for device 500.

In an example, device 500 comprises one or both PCU 510 or PMIC 512. In an example, any one of PCU 510 or PMIC 512 may be absent in device 500, and hence, these components are illustrated using dotted lines.

Various power management operations of device 500 may be performed by PCU 510, by PMIC 512, or by a combination of PCU 510 and PMIC 512. For example, PCU 510 and/or PMIC 512 may select a power state (e.g., P-state) for various components of device 500. For example, PCU 510 and/or PMIC 512 may select a power state (e.g., in accordance with the ACPI (Advanced Configuration and Power Interface) specification) for various components of device 500. Merely as an example, PCU 510 and/or PMIC 512 may cause various components of the device 500 to transition to a sleep state, to an active state, to an appropriate C state (e.g., C0 state, or another appropriate C state, in accordance with the ACPI specification), etc. In an example, PCU 510 and/or PMIC 512 may control a voltage output by voltage regulator 514 and/or a frequency of a clock signal output by the clock generator, e.g., by outputting the VID signal and/or the FID signal, respectively. In an example, PCU 510 and/or PMIC 512 may control battery power usage, charging of battery 518, and features related to power saving operation.

The clock generator 516 can comprise a phase locked loop (PLL), frequency locked loop (FLL), or any suitable clock source. In some embodiments, each core of processor 504 has its own clock source. As such, each core can operate at a frequency independent of the frequency of operation of the other core. In some embodiments, PCU 510 and/or PMIC 512 performs adaptive or dynamic frequency scaling or adjustment. For example, clock frequency of a processor core can be increased if the core is not operating at its maximum power consumption threshold or limit. In some embodiments, PCU 510 and/or PMIC 512 determines the operating condition of each core of a processor, and opportunistically adjusts frequency and/or power supply voltage of that core without the core clocking source (e.g., PLL of that core) losing lock when the PCU 510 and/or PMIC 512 determines that the core is operating below a target performance level. For example, if a core is drawing current from a power supply rail less than a total current allocated for that core or processor 504, then PCU 510 and/or PMIC 512 can temporality increase the power draw for that core or processor 504 (e.g., by increasing clock frequency and/or power supply voltage level) so that the core or processor 504 can perform at higher performance level. As such, voltage and/or frequency can be increased temporality for processor 504 without violating product reliability.

In an example, PCU 510 and/or PMIC 512 may perform power management operations, e.g., based at least in part on receiving measurements from power measurement circuitries 542, temperature measurement circuitries 540, charge level of battery 518, and/or any other appropriate information that may be used for power management. To that end, PMIC 512 is communicatively coupled to one or more sensors to sense/detect various values/variations in one or more factors having an effect on power/thermal behavior of the system/platform. Examples of the one or more factors include electrical current, voltage droop, temperature, operating frequency, operating voltage, power consumption, inter-core communication activity, etc. One or more of these sensors may be provided in physical proximity (and/or thermal contact/coupling) with one or more components or logic/IP blocks of a computing system. Additionally, sensor(s) may be directly coupled to PCU 510 and/or PMIC 512 in at least one embodiment to allow PCU 510 and/or PMIC 512 to manage processor core energy at least in part based on value(s) detected by one or more of the sensors.

Also illustrated is an example software stack of device 500 (although not all elements of the software stack are illustrated). Merely as an example, processors 504 may execute application programs 550, Operating System 552, one or more power management (PM) specific application programs (e.g., generically referred to as PM applications 558), and/or the like. PM applications 558 may also be executed by the PCU 510 and/or PMIC 512. OS 552 may also include one or more PM applications 556a, 556b, 556c. The OS 552 may also include various drivers 554a, 554b, 554c, etc., some of which may be specific for PM purposes. In some embodiments, device 500 may further comprise a BIOS 520. BIOS 520 may communicate with OS 552 (e.g., via one or more drivers 554), communicate with processors 504, etc.

For example, one or more of PM applications 558, 556, drivers 554, BIOS 520, etc. may be used to implement PM specific tasks, e.g., to control voltage and/or frequency of various components of device 500, to control wake-up state, sleep state, and/or any other appropriate power state of various components of device 500, control battery power usage, charging of the battery 518, features related to power saving operation, etc.

In some embodiments, battery 518 is a Li-metal battery with a pressure chamber to allow uniform pressure on a battery. The pressure chamber is supported by metal plates (such as pressure equalization plate) used to give uniform pressure to the battery. The pressure chamber may include pressured gas, elastic material, spring plate, etc. The outer skin of the pressure chamber is free to bow, restrained at its edges by (metal) skin, but still exerts a uniform pressure on the plate that is compressing the battery cell. The pressure chamber gives uniform pressure to battery, which is used to enable high-energy density battery with, for example, 20% more battery life.

In some embodiments, pCode executing on PCU 510a/b has a capability to enable extra compute and telemetries resources for the runtime support of the pCode. Here pCode refers to a firmware executed by PCU 510a/b to manage performance of the SoC 501. For example, pCode may set frequencies and appropriate voltages for the processor. Part of the pCode are accessible via OS 552. In various embodiments, mechanisms and methods are provided that dynamically change an Energy Performance Preference (EPP) value based on workloads, user behavior, and/or system conditions. There may be a well-defined interface between OS 552 and the pCode. The interface may allow or facilitate the software configuration of several parameters and/or may provide hints to the pCode. As an example, an EPP parameter may inform a pCode algorithm as to whether performance or battery life is more important.

This support may be done as well by the OS 552 by including machine-learning support as part of OS 552 and either tuning the EPP value that the OS hints to the hardware (e.g., various components of SoC 501) by machine-learning prediction, or by delivering the machine-learning prediction to the pCode in a manner similar to that done by a Dynamic Tuning Technology (DTT) driver. In this model, OS 552 may have visibility to the same set of telemetries as are available to a DTT. As a result of a DTT machine-learning hint setting, pCode may tune its internal algorithms to achieve optimal power and performance results following the machine-learning prediction of activation type. The pCode as example may increase the responsibility for the processor utilization change to enable fast response for user activity, or may increase the bias for energy saving either by reducing the responsibility for the processor utilization or by saving more power and increasing the performance lost by tuning the energy saving optimization. This approach may facilitate saving more battery life in case the types of activities enabled lose some performance level over what the system can enable. The pCode may include an algorithm for dynamic EPP that may take the two inputs, one from OS 552 and the other from software such as DTT, and may selectively choose to provide higher performance and/or responsiveness. As part of this method, the pCode may enable in the DTT an option to tune its reaction for the DTT for different types of activity.

Some non-limiting examples of various embodiments are presented below.

Example 1 may include an electronic device comprising: a SoC; a USB port to provide a first identification signal that is at a first voltage and that is related to a charging process between a USB device to which the USB port is coupled an the electronic device; and a PD controller to: generate, based on the first identification signal, a second identification signal at a second voltage that is lower than the first voltage; and provide the second identification signal to the SoC.

Example 2 may include the electronic device of example 1, or some other example herein, wherein the PD controller is further to identify, based on the first identification signal, whether the electronic device is in a host mode or a device mode; and wherein the second identification signal includes an indication of whether the electronic device is to operate in the host mode or the device mode.

Example 3 may include the electronic device of example 2, or some other example herein, wherein if the electronic device is in the host mode, the electronic device is to supply current to the USB device.

Example 4 may include the electronic device of example 2, or some other example herein, wherein if the electronic device is in the device mode, the electronic device is to draw current from the USB device.

Example 5 may include the electronic device of example 1, or some other example herein, wherein the PD controller is further to identify, based on the first identification signal, a cable orientation or a charger type related to the USB device; and wherein the second identification signal includes an indication of the cable orientation or the charger type.

Example 6 may include the electronic device of example 1, or some other example herein, wherein the SoC includes an integrated sensor hub (ISH) that is to decide, based on the second identification signal, whether to route electric signals related to charging between the USB device and a USB host controller of the SoC or a USB device controller if the SoC.

Example 7 may include the electronic device of example 1, or some other example herein, wherein the PD controller is to provide the second identification signal on an I2C pin of the SoC.

Example 8 may include the electronic device of example 1, or some other example herein, wherein the first voltage is greater than or equal to 1.8 volts (V).

Example 9 may include the electronic device of example 1, or some other example herein, wherein the second voltage is less than 1.8 Volts (V).

Example 10 may include the electronic device of example 1, or some other example herein, wherein the USB port is a USB2.0 or a USB 3.x port.

Example 11 may include the electronic device of example 1, or some other example herein, wherein the PD controller is a first PD controller and the USB port is a first USB port, and further comprising: a second USB port to provide a third identification signal that is at a voltage greater than or equal to 1.8 Volts (V) and that is related to a charging process between the electronic device and a USB device to which the USB port is coupled; and a second PD controller to: generate, based on the third identification signal, a fourth identification signal at a voltage that is less than 1.8 V; and provide the second identification signal to the SoC.

Example 12 may include a SoC to be used in an electronic device, wherein the SoC comprises: a USB host controller; a USB device controller; and an ISH that is to: receive, from a PD controller, an identification signal related to a charging process between the electronic device and a USB device to which the PD controller is communicatively coupled by a USB port; and route, based on the identification signal, signals related to charging between the USB device and one of the USB host controller and the USB device controller.

Example 13 may include the SoC of example 12, or some other example herein, wherein the ISH is to identify, based on the identification signal, whether the electronic device is in a host mode or a device mode.

Example 14 may include the SoC of example 13, or some other example herein, wherein the ISH is to route the signals related to charging between the USB device and the USB host controller if the identification signal indicates that the electronic device is in the host mode.

Example 15 may include the SoC of example 13, or some other example herein, wherein the ISH is to route the signals related to charging between the USB device and the USB device controller if the identification signal indicates that the electronic device is in the device mode.

Example 16 may include the SoC of example 13, or some other example herein, wherein if the electronic device is in the host mode, the electronic device is to supply current to the USB device.

Example 17 may include the SoC of example 13, or some other example herein, wherein if the electronic device is in the device mode, the electronic device is to draw current from the USB device.

Example 18 may include the SoC of example 12, or some other example herein, wherein the USB port is a USB2.0 or a USB 3.x port.

Example 19 may include a PD controller to be used in an electronic device, wherein the PD controller is to: identify, a first identification signal received from a USB device via a USB port; identify, based on the first identification signal, whether the electronic device is to act in a host mode or a device mode for a charging process between the electronic device and the USB device; generate a second identification signal that includes an indication of whether the electronic device is to act in the host mode or the device mode; and output the second identification signal to a SoC of the electronic device.

Example 20 may include the PD controller of example 19, or some other example herein, wherein the electronic device is to supply current to the USB device if the electronic device is in the host mode during the charging process.

Example 21 may include the PD controller of example 19, or some other example herein, wherein the electronic device is to draw current from the USB device if the electronic device is in the device mode during the charging process.

Example 22 may include the PD controller of example 19, or some other example herein, wherein the USB port is a USB2.0 or a USB 3.x port.

Example 23 may include the PD controller of example 19, or some other example herein, wherein the first identification signal has a first voltage is greater than or equal to 1.8 volts (V), and the second identification signal has a second voltage of less than 1.8 Volts (V).

Example 24 may include the PD controller of example 19, or some other example herein, wherein the PD controller is further to identify, based on the first identification signal, a cable orientation or a charger type related to the USB device; and wherein the second identification signal includes an indication of the cable orientation or the charger type.

Example 25 may include the PD controller of example 19, or some other example herein, wherein the PD controller is to provide the second identification signal on an I2C pin of the SoC.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well-known power/ground connections to IC chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

An abstract is provided that will allow the reader to ascertain the nature and gist of the technical disclosure. The abstract is submitted with the understanding that it will not be used to limit the scope or meaning of the claims. The following claims are hereby incorporated into the detailed description, with each claim standing on its own as a separate embodiment.

## Claims

1. An electronic device comprising:
a system-on-chip (SoC);
a USB port to provide a first identification signal that is at a first voltage and that is related to a charging process between a USB device to which the USB port is coupled an the electronic device; and
a power delivery (PD) controller to:
generate, based on the first identification signal, a second identification signal at a second voltage that is lower than the first voltage; and
provide the second identification signal to the SoC.

2. The electronic device of claim 1, wherein the PD controller is further to identify, based on the first identification signal, whether the electronic device is in a host mode or a device mode; and
wherein the second identification signal includes an indication of whether the electronic device is to operate in the host mode or the device mode.

3. The electronic device of claim 1, wherein the PD controller is further to identify, based on the first identification signal, a cable orientation or a charger type related to the USB device; and
wherein the second identification signal includes an indication of the cable orientation or the charger type.

4. The electronic device of claim 1, wherein the SoC includes an integrated sensor hub (ISH) that is to decide, based on the second identification signal, whether to route electric signals related to charging between the USB device and a USB host controller of the SoC or a USB device controller of the SoC.

5. The electronic device of any of claims 1-4, wherein the PD controller is to provide the second identification signal on an I2C pin of the SoC; or
optionally, wherein the first voltage is greater than or equal to 1.8 volts (V); or
optionally, wherein the second voltage is less than 1.8 Volts (V).

6. The electronic device of any of claims 1-4, wherein the PD controller is a first PD controller and the USB port is a first USB port, and further comprising:
a second USB port to provide a third identification signal that is at a voltage greater than or equal to 1.8 Volts (V) and that is related to a charging process between the electronic device and a USB device to which the USB port is coupled; and
a second PD controller to:
generate, based on the third identification signal, a fourth identification signal at a voltage that is less than 1.8 V; and
provide the second identification signal to the SoC.

7. A system-on-chip (SoC) to be used in an electronic device, wherein the SoC comprises:
a universal serial bus (USB) host controller;
a USB device controller; and
an integrated sensor hub (ISH) that is to:
receive, from a power delivery (PD) controller, an identification signal related to a charging process between the electronic device and a USB device to which the PD controller is communicatively coupled by a USB port; and
route, based on the identification signal, signals related to charging between the USB device and one of the USB host controller and the USB device controller.

8. The SoC of claim 7, wherein the ISH is to identify, based on the identification signal, whether the electronic device is in a host mode or a device mode.

9. The SoC of claim 8, wherein the ISH is to route the signals related to charging between the USB device and the USB host controller if the identification signal indicates that the SoC is in the host mode; or
optionally, wherein the ISH is to route the signals related to charging between the USB device and the USB device controller if the identification signal indicates that the SoC is in the device mode.

10. The SoC of claim 8, wherein if the electronic device is in the host mode, the electronic device is to supply current to the USB device; or
optionally, wherein if the electronic device is in the device mode, the electronic device is to draw current from the USB device.

11. A power delivery (PD) controller to be used in an electronic device, wherein the PD controller is to:
identify, a first identification signal received from a universal serial bus (USB) device via a USB port;
identify, based on the first identification signal, whether the electronic device is to act in a host mode or a device mode for a charging process between the electronic device and the USB device;
generate a second identification signal that includes an indication of whether the electronic device is to act in the host mode or the device mode; and
output the second identification signal to a system-on-chip (SoC) of the electronic device.

12. The PD controller of claim 11, wherein the electronic device is to supply current to the USB device if the electronic device is in the host mode during the charging process; or
optionally, wherein the electronic device is to draw current from the USB device if the electronic device is in the device mode during the charging process.

13. The PD controller of claim 11, wherein the USB port is a USB2.0 or a USB 3.x port.

14. The PD controller of any of claims 11-13, wherein the PD controller is further to identify, based on the first identification signal, a cable orientation or a charger type related to the USB device; and
wherein the second identification signal includes an indication of the cable orientation or the charger type.

15. The PD controller of any of claims 11-13, wherein the PD controller is to provide the second identification signal on an I2C pin of the SoC.
